# FASCICULE DE BREVET EUROPEEN

(11) **EP 2 734 759 B1**
(45) Date de publication et mention de la délivrance du brevet: **17.08.2016**
(21) Numéro de dépôt: 12743511.3
(22) Date de dépôt: 12.07.2012
(51) Int. Cl.: F16K 3/26, B65D 47/28, B65D 47/24, B65D 75/58

(54) **VALVE À FONCTIONNEMENT SÉLECTIF POUR UN RÉCIPIENT À USAGE BIOPHARMACEUTIQUE**
SELEKTIV BETRIEBENES VENTIL FÜR EINEN BEHÄLTER ZUR BIOPHARMAZEUTISCHEN VERWENDUNG
SELECTIVE OPERATION VALVE FOR A RECIPIENT FOR BIOPHARMACEUTICAL USE

(30) Priorité: 19.07.2011 FR 1156541
(43) Date de publication de la demande: 28.05.2014
(73) Titulaire: SARTORIUS STEDIM FMT SAS, 13400 Aubagne (FR)
(72) Inventeur: BLAKE, Florian, F-83400 Hyeres (FR); GIBELIN, Jérémy, F-83330 Le Beausset (FR)
(74) Mandataire: Derambure Conseil
(86) Numéro de dépôt international: PCT/FR2012/051663
(87) Numéro de publication internationale: WO 2013/011232

(56) Documents cités:
- WO-A1-2006/087740
- WO-A2-2007/035592
- DE-C1- 10 000 391
- US-A1- 2005 016 620

## Description

L'invention est relative aux valves à fonctionnement sélectif destinées à équiper les récipients à usage biopharmaceutique.

Un tel récipient est qualifié de biopharmaceutique pour la raison qu'il est destiné à contenir un produit biopharmaceutique pour un processus biopharmaceutique. Un tel produit biopharmaceutique s'entend, dans le contexte de la demande de brevet, d'un produit issu de la biotechnologie - milieux de cultures, cultures cellulaires, solutions tampon, liquides de nutrition artificielle... - ou d'un produit pharmaceutique ou plus généralement un produit destiné à être utilisé dans le domaine médical. Un tel produit est sous forme liquide, pâteuse, poudreuse, en une ou plusieurs phases, homogènes ou non, et en tout état de cause apte à s'écouler à travers une valve, raison pour laquelle le produit peut, dans le contexte de l'invention, être qualifié de « fluide ». L'invention s'applique également à tout produit autre que selon la définition qui vient d'en être donnée, mais qui peut être considéré comme analogue au regard des propriétés mises en oeuvre dans le cadre d'un flux dudit produit réglé par une valve pouvant être à l'état fermé ou à l'état ouvert. Un tel processus biopharmaceutique inclut notamment l'emplissage, le mélange, le stockage et le vidage du produit biopharmaceutique en relation avec le récipient.

Le document WO 2007035592 décrit une valve à fonctionnement sélectif, destinée à équiper un récipient à usage biopharmaceutique dont la paroi comporte une ouverture à cet effet. Cette valve présente un axe général et comprend :
▪ une pièce femelle, creuse, ayant une partie formant bride latérale, apte à être fixée à la paroi du récipient et une ouverture de valve transversale,
▪ une pièce mâle, creuse, montée à coulissement axial dans la pièce femelle sur une certaine course entre un état fermé et un état ouvert, ayant une partie proximale de fermeture/ouverture pourvue d'une ouverture de valve latérale, proximale,
▪ et deux joints toriques d'étanchéité portés par la pièce mâle de part et d'autre de l'ouverture de valve latérale.

Une telle valve vise à éviter la présence de zones mortes, qui sont des volumes de produit né pouvant être agité, et donc mélangé. De telles zones mortes peuvent plus particulièrement apparaître dans la partie inférieure du récipient où les produits à mélanger contenus dans le récipient se concentrent par gravité.

De par sa conception, la valve selon le document WO 2007035592 ne peut être utilisée que pour une opération de vidange, la partie mâle de la valve étant alors en position saillante par rapport à la paroi du récipient et localisée dans l'espace intérieur même du récipient.

Le document DE 100 00 391 vise une valve en général qui s'applique à une bouteille pour une boisson. En aucun cas cette valve est destinée à équiper un récipient à usage biopharmaceutique. Or, pour cette application, il existe des risques très importants de contagion bactérienne et la valve doit être conçue pour les éviter. La valve du document DE 100 00 391 est à deux joints d'étanchéité et, en conséquence, n'est pas adaptée au cas visé par l'invention où il existe un risque de contagion bactérienne.

Le document US 2005/016620 divulgue un dispositif de transfert stérile pour fluides comprenant un corps ayant un alésage formé à travers au moins une partie de son intérieur, un piston mobile contenu dans l'alésage, le corps ayant une première extrémité et une seconde extrémité, la première extrémité ayant une face conçue afin d'être jointe à l'élément amont, la seconde extrémité étant reliée à un composant en aval, la première extrémité du plongeur lorsqu'il est dans une position fermée étant'en alignement avec la face du corps.

Le document WO 2006/087740 divulgue un bouchon pour bouteille ayant une cavité interne et une paroi tubulaire définissant une embouchure, ledit bouchon comprenant une partie axialement fixe ayant : une première paroi apte à être connectée à ladite paroi tubulaire, une paroi intérieure apte à être disposée dans ladite paroi tubulaire et ayant au moins une ouverture radiale, un anneau apte à connecter ladite première structure de paroi à ladite paroi intérieure, une paroi de fond transversale reliée à ladite paroi intérieure, un bec mobile qui peut prendre une première position fermée et une seconde position ouverte, ledit bec verseur ayant une paroi et une sortie.

Il existe le besoin d'une valve à fonctionnement sélectif destinée à équiper un récipient biopharmaceutique, qui puisse fonctionner tant pour le drainage que pour l'emplissage et qui ne comporte pas de partie mobile en position saillante par rapport à la paroi du récipient et localisée dans l'espace intérieur même du récipient et pas ou très peu de zones mortes lors du processus de traitement du produit fluide. Il existe également le besoin qu'une telle valve empêche ou limite les effets indésirables d'une contamination d'origine extérieure, ce qui permet alors de faire fonctionner la valve selon plusieurs séquences aller-retour. Il existe également le besoin que les joints d'étanchéité ne soient pas outre mesure sollicités par des concentrations de contraintes importante à l'endroit de parties aigües de la valve et que le risque que les joints d'étanchéité se coupent ou soient endommagés soit empêché ou du moins minimisé.

L'invention vise à apporter une solution à ces problèmes, tout en proposant une valve qui soit en outre simple et économique dans sa fabrication et son montage.

A cet effet, selon un premier aspect, l'invention a pour objet une valve à fonctionnement sélectif, destinée à équiper un récipient à usage biopharmaceutique dont la paroi comporte une ouverture à cet effet, du type ayant un axe général et comprenant :
▪ une pièce femelle, creuse, ayant une partie formant bride latérale, apte à être fixée à la paroi du récipient et une première ouverture de valve,
▪ une pièce mâle, creuse, montée à coulissement axial dans la pièce femelle sur une course C entre un état fermé et un état ouvert, ayant une partie proximale de fermeture/ouverture pourvue d'une seconde ouverture de valve, proximale, apte, de façon sélective, à empêcher ou à permettre le passage du produit fluide, respectivement dans l'état fermé et dans l'état ouvert, une partie distale pourvue d'une ouverture distale, et un passage apte au passage du produit fluide, ménagé dans la partie proximale et la partie distale entre la seconde ouverture de valve et l'ouverture distale,
▪ des moyens d'étanchéité.

Cette valve est telle que :
▪ la pièce femelle comporte une paroi d'extrémité, fermée, transversale, proximale, et une paroi tubulaire s'étendant axialement, faisant corps avec la partie formant bride, ladite paroi tubulaire comportant un tronçon proximal entre la paroi d'extrémité et la partie formant bride, s'étendant axialement sur une longueur au moins égale à la course C, et un tronçon distal fermé du côté opposé au tronçon proximal par rapport à la partie formant bride, la première ouverture étant une ouverture de valve latérale ménagée sur ledit tronçon proximal,
▪ la pièce mâle comporte une paroi tubulaire s'étendant axialement, formant, du côté proximal, la partie de fermeture/ouverture dont l'extrémité transversale proximale ouverte constitue la seconde ouverture, et, formant, du côté distal, la partie distale,
▪ la partie de fermeture/ouverture a une forme extérieure et une dimension extérieure en correspondance avec la forme intérieure et la dimension intérieure de la partie de réception, proximale, de la pièce femelle délimitée par sa paroi d'extrémité et son tronçon proximal de paroi tubulaire,
▪ les moyens d'étanchéité comprennent trois joints annulaires écartés en direction axiale les uns des autres, portés par l'extrados de la paroi tubulaire de la pièce mâle et coopérant avec la partie femelle, un joint proximal au produit fluide, associé à la partie de fermeture/ouverture, un joint distal aux contaminants d'origine extérieure, le plus écarté du joint proximal, et un joint intermédiaire au produit fluide et aux contaminants d'origine extérieure entre le joint proximal et le joint distal.

Dans l'état fermé, la partie de fermeture/ouverture est située dans la partie de réception, la pièce mâle obturant l'ouverture de valve latérale.

Dans l'état ouvert, la partie de fermeture/ouverture est située hors de la partie de réception, l'ouverture de valve latérale et l'ouverture de valve transversale étant dégagées et aptes à permettre le passage du produit fluide.

Dans une réalisation, l'ouverture de valve latérale est adjacente à la partie formant bride, du côté proximal.

Le joint proximal au produit fluide coopère au contact de l'intrados de la partie de la paroi tubulaire de la pièce femelle dans l'état fermé, de sorte à empêcher le passage du produit fluide à partir ou vers le récipient par l'ouverture de valve transversale.

Le joint distal aux contaminants d'origine extérieure coopère au contact permanent de l'intrados de la partie distale de la paroi tubulaire de la pièce femelle tant dans l'état fermé que dans l'état ouvert, de sorte à empêcher ou limiter le passage de contaminants d'origine extérieure vers le récipient, par suite de mouvements de coulissement axial aller-retour de la pièce mâle.

Le joint intermédiaire au produit fluide et aux contaminants d'origine extérieure coopère au contact permanent de l'intrados de la partie distale de la paroi tubulaire de la pièce femelle tant dans l'état fermé que dans l'état ouvert, de sorte à empêcher le passage de produit fluide.

L'écartement en direction axiale entre le joint intermédiaire et le joint distal est au moins égal, en particulier est légèrement supérieur à la course C.

Selon une réalisation, la pièce mâle présente un diamètre transversal légèrement plus petit dans la partie de fermeture/ouverture, de sorte que le joint proximal au produit fluide soit sans contact frottant substantiel avec, et plus particulièrement soit légèrement écarté de l'intrados de, la partie distale de la paroi tubulaire de la pièce femelle dans l'état ouvert. En outre, le joint proximal a un diamètre extérieur légèrement plus petit que le diamètre extérieur du joint intermédiaire et du joint distal.

Selon une réalisation, la zone de liaison entre l'intrados de la partie proximale de la paroi tubulaire de la pièce femelle et la zone de l'ouverture de valve latérale est chanfreinée, de sorte à être dépourvue d'angle vif.

Selon une réalisation, la pièce mâle saille de la pièce femelle du côté distal, tant dans l'état fermé que dans l'état ouvert. En particulier, la partie extrême distale de la partie distale de la pièce mâle forme ou supporte ou coopère avec un moyen de connexion.

Selon une réalisation, la pièce mâle et la pièce femelle sont reliées cinématiquement l'une à l'autre par un moyen de type hélicoïdal, tel qu'un pivotement axial relatif imprimé à la pièce mâle entraîne son coulissement axial, en particulier un moyen comprenant un ergot latéral d'une pièce coopérant avec une gorge hélicoïdale de l'autre pièce.

Selon les cas, la valve est une valve de drainage et/ou est une valve d'emplissage.

L'invention vise la valve à l'état fermé, la partie de fermeture/ouverture étant située dans la partie de réception et la pièce mâle obturant l'ouverture de valve latérale. Elle vise également la valve à l'état ouvert, la partie de fermeture/ouverture étant située hors de la partie de réception et l'ouverture de valve latérale et l'ouverture de valve transversale étant dégagées et aptes à permettre le passage du produit fluide.

L'invention vise également une valve multiple comprenant une pluralité de valves telles qu'elles ont été précédemment décrites, la pluralité de pièces femelles et la même pluralité de pièces mâles étant disposées les unes à côté des autres, la partie formant bride étant commune à la pluralité de pièces femelles.

Selon un autre aspect, l'invention a pour objet un ensemble comprenant une valve telle qu'elle a été précédemment décrite et un récipient à usage biopharmaceutique dont la paroi comporte une ouverture pour le montage de la valve, la partie formant bride étant solidarisée de façon fixe et étanche à la paroi du récipient autour de l'ouverture, la partie proximale de la pièce femelle étant située dans l'espace intérieur délimité par la paroi du récipient et la partie distale de la pièce femelle étant située hors dudit espace intérieur.

Dans une réalisation, la valve est située dans la partie de la paroi du récipient destinée à être une partie inférieure, la valve étant une valve d'emplissage et/ou de drainage. Dans une autre réalisation, la valve est située dans la partie de la paroi du récipient destinée à être une partie supérieure ou au voisinage de la partie supérieure, la valve étant une valve d'emplissage.

Dans une réalisation, le récipient à usage biopharmaceutique est équipé d'un moyen fonctionnel assurant une fonction en vue du processus biopharmaceutique réalisé au moyen du récipient, situé au moins pour partie dans l'espace intérieur du récipient. En particulier, ledit moyen fonctionnel est situé, au moins pour partie, au voisinage de la valve, et en particulier est pour partie associée structurellement à elle. Selon les cas, le moyen fonctionnel est un moyen de mélange ou un aérateur ou un autre moyen assurant une fonction en vue du processus biopharmaceutique.

On décrit maintenant un mode particulier de réalisation de l'invention à l'aide des dessins, dans lesquels :
- la figure 1 est une vue en coupe axiale illustrant une valve selon l'invention et une partie de la paroi du récipient dont elle est attenante, dans l'état fermé.
- la figure 2 est une vue en coupe axiale analogue à celle de la figure 1, illustrant la valve dans l'état ouvert.

Une valve 1 selon l'invention est à fonctionnement sélectif et spécialement destinée à équiper un récipient 2 biopharmaceutique, selon la définition qui en a été précédemment donnée, dont la paroi 2a comporte une ouverture 2b à cet effet.

La paroi 2a délimite à l'intérieur du récipient 2, un espace intérieur 2c, par opposition à l'espace extérieur 2d.

Selon les réalisations envisagées, le récipient 2 est rigide et réutilisable ou il est souple et à usage unique tel qu'une poche telle qu'une poche dite 2D ou une poche dite 3D, du type décrit dans le docu ment WO 00/04131.

Le récipient 2 est destiné à contenir un produit biopharmaceutique en une ou plusieurs phases, homogènes ou non, fluide, c'est-à-dire apte à s'écouler à travers une valve, pour un processus biopharmaceutique incluant notamment l'emplissage, le mélange, le stockage et le vidage du produit biopharmaceutique en relation avec le récipient 2.

Si nécessaire, le récipient 2 est équipé d'un moyen de mélange du produit fluide, disposé au moins pour partie dans l'espace intérieur 2c. Selon les réalisations, un tel moyen de mélange peut être situé, en tout ou en partie, au voisinage de la valve 2, et en particulier être pour partie associée structurellement à elle, par exemple portée par elle. Dans d'autres réalisations, le récipient 2 est équipé d'un moyen fonctionnel autre qu'un moyen de mélange, tel qu'un aérateur ou un autre moyen assurant une fonction en vue du processus biopharmaceutique.

Dans une réalisation, la valve 1 est située dans la partie de la paroi 2a du récipient 2 destinée à être une partie inférieure, la valve 1 étant une valve d'emplissage et/ou de drainage. Dans une autre réalisation, la valve 1 est située dans la partie de la paroi 2a du récipient 2 destinée à être une partie supérieure ou au voisinage de la partie supérieure, la valve 1 étant une valve d'emplissage.

La valve 1 comporte une pièce femelle 3, une pièce mâle 4, toutes deux rigides, creuses et de forme générale cylindrique à base circulaire. Elle comporte également des moyens d'étanchéité 5. Les pièces femelle 3 et mâle 4 sont associées l'une avec l'autre, avec interposition des moyens d'étanchéité 5, la pièce femelle 3 étant située à l'extérieur et la pièce mâle étant située à l'intérieur, et ce au regard d'un plan transversal de la valve 1. L'ensemble des pièces, et chacune d'elles, présentent un axe 1a, disposé perpendiculairement ou sensiblement perpendiculairement à la paroi 2a dans la région de l'ouverture 2b du récipient 2.

Le terme « proximal » se réfère conventionnellement à ce qui, de façon relative, est proche, ou plus proche, du récipient 2, tandis que le terme « distal » se réfère inversement à ce qui, de façon relative, est éloigné, ou plus éloigné, du récipient 2. Ces qualificatifs sont utilisés pour repérer les parties constitutives de la valve 1 et leur disposition relative entre elles et par rapport au récipient 2, et pour identifier les mouvements le long de l'axe 1a. Il est entendu toutefois que la valve 1 peut être considérée en soi, indépendamment du récipient 2, avant montage sur celui-ci.

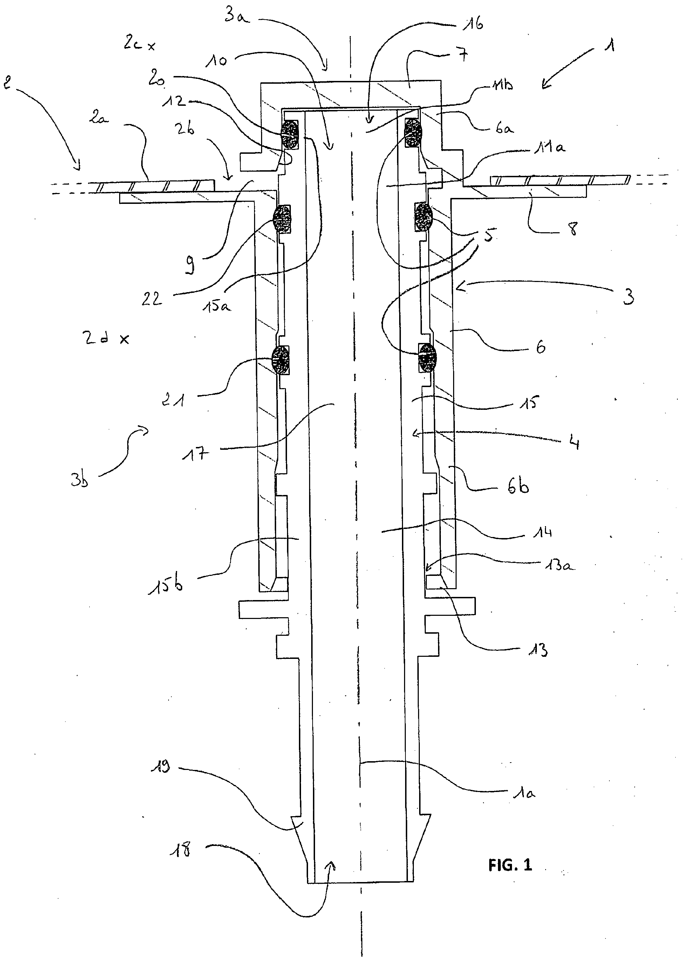

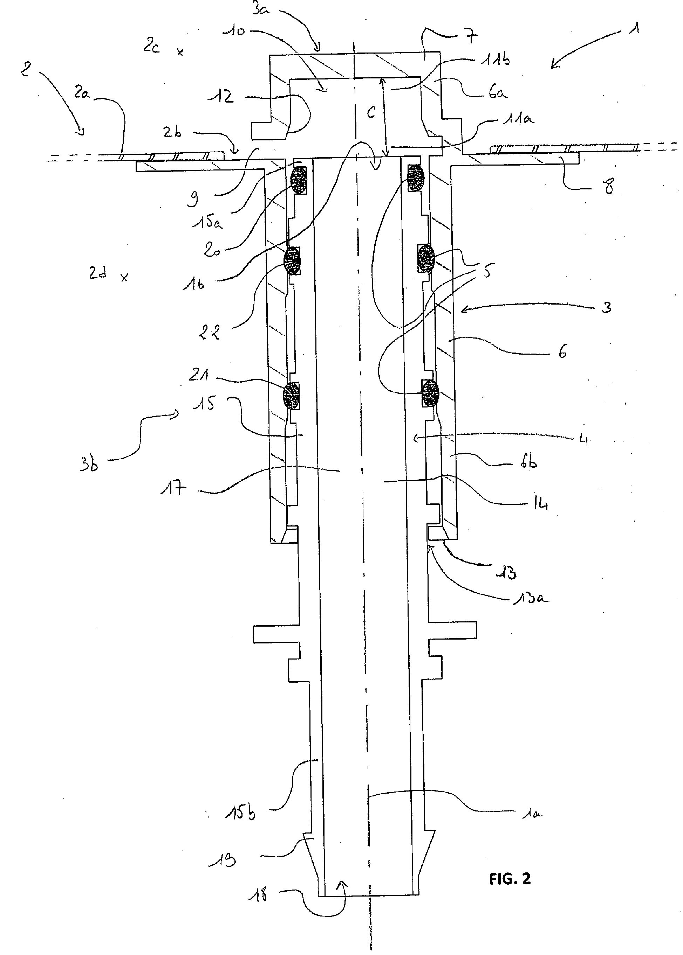

L'expression « état fermé » se réfère à la situation dans laquelle la valve 1 est fermée c'est-à-dire qu'un produit fluide est empêché de la traverser, comme représenté sur la figure 1, tandis que l'expression « état ouvert » se réfère inversement à la situation dans laquelle la valve 1 est ouverte c'est-à-dire qu'un produit fluide peut la traverser, comme représenté sur la figure 2. Les mouvements le long de l'axe 1a entre l'état fermé et l'état ouvert comprennent un coulissement axial de course C. Plus généralement les termes « fermé » et « ouvert » se réfèrent, respectivement, à une situation où le passage d'un produit fluide est empêché, et à une situation où ce passage est possible.

Les termes « axial » et « axialement » se réfèrent à ce qui s'étend dans la direction générale de l'axe 1a, tandis que les termes « transversal » et « transversalement » se réfèrent à ce qui s'étend dans un plan généralement perpendiculaire à l'axe 1a. Quant au terme « latéral », il se réfère à ce qui est situé sur le côté par rapport à l'axe 1a.

La pièce femelle 3 comporte une paroi tubulaire 6, s'étendant axialement.

La pièce femelle 3 comporte, à son extrémité proximale, une paroi d'extrémité 7, fermée, transversale, proximale, qui ferme à cet endroit la paroi tubulaire 6.

La pièce femelle 3 comporte une partie formant bride latérale 8, dirigée transversalement à l'opposé de l'axe 1a, telle qu'une collerette en forme d'anneau plat.

La paroi tubulaire 6, la paroi d'extrémité 7 et la partie formant bride 8 font corps et, par exemple réalisées en une seule pièce en matière plastique.

Le récipient 2 avec la valve 1 est tel que la partie formant bride 8 est solidarisée de façon fixe et façon étanche à la paroi 2a autour de l'ouverture 2b, par collage, soudage ou de toute autre manière adaptée.

La partie formant bride 8 délimite, s'agissant de la paroi tubulaire 6, un tronçon proximal 6a et un tronçon distal 6b et, s'agissant de la pièce femelle 3, une partie proximale 3a et une partie distale 3b.

Le tronçon proximal 6a s'étend axialement entre la paroi d'extrémité 7 et la partie formant bride 8. Il s'étend sur une longueur au moins égale à la course C, et plus particulièrement voisine de la course C, une longueur minimale étant généralement souhaitée.

Le tronçon distal 6b est fermé. Il se trouve du côté opposé au tronçon proximal 6a, par rapport à la partie formant bride 8. Il s'étend sur une longueur axiale qui, dans la réalisation représentée, est nettement plus grande que la longueur axiale du tronçon proximal 6a et de course C. Par exemple, le tronçon distal s'étend sur une longueur de l'ordre de plusieurs fois - tel que de l'ordre de trois à cinq fois - la longueur du tronçon proximal 6a, ces valeurs n'étant qu'exemplatives. A son extrémité distale 13 la pièce femelle 3 et, plus spécialement son tronçon distal 6b comporte une ouverture 13a, transversale, distale.

La pièce femelle 3 comporte également une ouverture de valve latérale 9, ménagée sur le tronçon proximal 6b, qui forme une première ouverture de valve.

La pièce femelle 3, prise en soi, est creuse, ménageant un espace 14 formant passage et guide, avec, du côté proximal, l'ouverture de valve latérale 9 et, du côté distal l'ouverture transversale distale 13a.

On appelle partie de réception 10, la partie intérieure de la pièce femelle 3 qui est proximale et délimitée par la paroi d'extrémité 7 et le tronçon proximal 6a.

Dans la réalisation représentée, l'ouverture de valve latérale 9 est adjacente à la partie formant bride 8, du côté proximal. Dans la zone transversale 11a de l'ouverture de valve latérale 9, la paroi tubulaire 6 est de diamètre élargi, par rapport à la zone transversale 11b du tronçon proximal 6a écarté de l'ouverture de valve latérale 9. Ainsi, l'entrée en direction proximale dans la partie de réception 10 est évasée.

En outre, la zone de liaison entre l'intrados de la partie proximale de la paroi tubulaire 6 et la zone 11a de l'ouverture de valve latérale 9 est chanfreinée, de sorte à présenter un chanfrein 12 transversal et latéral, ce qui a pour effet que la pièce femelle 3 est dépourvue à l'intérieur d'angle vif de nature à détériorer un joint d'étanchéité lors de son coulissement axial aller-retour.

Avec les dispositions constructives précédentes, la partie proximale 3a de la pièce femelle 3 est située dans l'espace intérieur 2c et la partie distale 3b de la pièce femelle 3 est située hors de l'espace intérieur 2c, dans l'espace extérieur 2d.

La pièce mâle 4 comporte une paroi tubulaire 15, s'étendant axialement.

La paroi tubulaire 15 est dimensionnée par rapport à la paroi tubulaire 6, de sorte que la pièce mâle 4 soit montée à coulissement axial dans la pièce femelle 3, sur la course C entre l'état fermé et l'état ouvert.

La paroi tubulaire 15 comporte une partie proximale de fermeture/ouverture 15a dont l'extrémité transversale proximale est ouverte, étant pourvue d'une ouverture de valve 16, transversale, proximale, qui forme une seconde ouverture de valve.

La paroi tubulaire 15 forme, du côté distal, une partie distale 15b.

La pièce mâle 4 est apte, de façon sélective, à empêcher ou à permettre le passage du produit fluide, respectivement dans l'état fermé et dans l'état ouvert.

Dans la réalisation représentée, la pièce mâle 4 saille de la pièce femelle 3, du côté distal, tant dans l'état fermé que dans l'état ouvert, la pièce mâle 4 ayant une longueur axiale plus grande que celle de la pièce femelle 3. Par exemple, la pièce mâle 4 peut avoir une longueur comprise entre une fois et deux fois celle de la pièce femelle 3.

La partie de fermeture/ouverture 15a de la pièce mâle 4 a une forme extérieure et une dimension extérieure en correspondance avec la forme intérieure et la dimension intérieure de la partie de réception 10 de la pièce femelle 3.

D'autre part, la pièce mâle 4 présente un diamètre extérieur transversal légèrement plus petit dans la partie de fermeture/ouverture 15a, le diamètre intérieur de la partie de réception 10 de la pièce femelle 3 étant défini en conséquence.

La pièce mâle 4, prise en soi, est creuse, ménageant un espace 17 formant passage, avec, à l'extrémité proximale, l'ouverture de valve transversale 16, proximale et, à l'extrémité distale une ouverture transversale distale 18.

Selon la réalisation représentée, la partie extrême distale de la partie distale 15b forme ou supporte ou coopère avec un moyen de connexion 19, tel que celui connu par l'homme du métier sous le nom « hose barb » (ce qui peut être traduit par dent de requin).

La pièce mâle 4 et la pièce femelle 3 sont associés structurellement l'une avec l'autre, la pièce mâle 4 étant montée coaxialement dans la pièce femelle 3. Les deux pièces 3 et 4 sont reliées cinématiquement l'une à l'autre par un moyen de type hélicoïdal, tel qu'un pivotement axial relatif imprimé à la pièce mâle 4 autour de l'axe 1a entraîne son coulissement axial. Ce moyen est, en particulier, du type comprenant un ergot latéral d'une pièce 3, 4, coopérant avec une gorge hélicoïdale de l'autre pièce 4, 3. Il est entendu que les deux pièces 3 et 4 peuvent être reliées cinématiquement de façon différente, pourvu que la pièce mâle 4 puisse coulisser axialement dans la pièce femelle 3 sur la course C.

En outre, il peut être prévu que la partie de la pièce mâle 4 qui saille de la pièce femelle 3 peut comporter ou être associée à des moyens d'entraînement ou de déplacement, manuels ou non.

Dans l'état fermé, la partie de fermeture/ouverture 15a est située dans la partie de réception 10. La pièce mâle 4 obture alors l'ouverture de valve latérale 9. Le produit fluide ne peut passer à travers la valve 1.

Dans l'état ouvert, la partie de fermeture/ouverture 15a est située hors de la partie de réception 10. L'ouverture de valve latérale 9 et l'ouverture de valve transversale 16 sont alors dégagées et aptes à permettre le passage du produit fluide. Le produit fluide peut passer à travers la valve 1.

Les moyens d'étanchéité 5 comprennent trois joints d'étanchéité annulaires 20, 21 et 22, tels que des joints toriques en silicone ou autre matériau équivalent.

Les trois joints 20, 21 et 22 sont écartés en direction axiale les uns des autres. Ils sont portés par l'extrados de la paroi tubulaire 15 de la pièce mâle 4. Ils coopèrent avec la partie femelle 3.

Ces trois joints sont :
- un joint proximal 20, joint au produit fluide, associé à la partie de fermeture/ouverture 15a
- un joint distal 21, joint aux contaminants d'origine extérieure (tels que des bactéries), le plus écarté du joint proximal 20, et
- un joint intermédiaire 22, joint au produit fluide et aux contaminants d'origine extérieure, situé entre le joint proximal 20 et le joint distal 21.

Le joint proximal 20 au produit fluide coopère au contact de l'intrados de la partie proximale de la paroi tubulaire 6 de la pièce femelle 3 dans l'état fermé. Par conséquent, le joint proximal 20 au produit fluide empêche le passage du produit fluide à partir ou vers le récipient 2 par l'ouverture de valve transversale 16.

Le joint distal 21 aux contaminants d'origine extérieure coopère au contact permanent de l'intrados de la partie distale 3b de la paroi tubulaire 6 de la pièce femelle 3, tant dans l'état fermé que dans l'état ouvert. Par conséquent, le joint distal 21 aux contaminants d'origine extérieure empêche ou limite le passage de contaminants d'origine extérieure vers le récipient 2, par suite de mouvements de coulissement axial aller-retour de la pièce mâle.

Le joint intermédiaire 22 au produit fluide et aux contaminants d'origine extérieure coopère au contact permanent de l'intrados de la partie distale 3b de la paroi tubulaire 6 de la pièce femelle 3 tant dans l'état fermé que dans l'état ouvert, de sorte à empêcher le passage de produit fluide.

L'écartement en direction axiale entre le joint intermédiaire 22 et le joint distal 21 est au moins égal, en particulier est légèrement supérieur à la course C.

La pièce mâle 4 présentant un diamètre extérieur transversal légèrement plus petit dans la partie de fermeture/ouverture 15a, le joint proximal 20 au produit fluide est sans contact frottant substantiel avec, et plus particulièrement est légèrement écarté de l'intrados de, la partie distale 3b de la paroi tubulaire 6 de la pièce femelle dans l'état ouvert. Par conséquent, le joint proximal 20 au produit fluide a un diamètre extérieur légèrement plus petit que le diamètre extérieur du joint intermédiaire 22 au produit fluide et aux contaminants d'origine extérieure et du joint distal 21 aux contaminants d'origine extérieure.

Il convient d'entendre par les termes « sans contact substantiel » que le joint proximal 20 n'est pas en contact avec l'intrados de la partie distale 3b dans l'état ouvert ou bien n'est que légèrement en contact avec cette partie distale 3b sans assurer d'étanchéité vis-à-vis de l'espace intérieur 2c du récipient 2. De cette façon, le joint proximal 20 n'est pas endommagé par le rebord de la partie distale 3b lorsque la valve passe de l'état fermé à l'état ouvert car il ne vient pas au contact du bord de la partie distale 3b lors de son mouvement quand la valve passe de l'état fermé à l'état ouvert.

Tout en présentant les caractéristiques dimensionnelles indiquées en ce qui concerne leur diamètre extérieur, les joints 20, 21 et 22 peuvent avoir une même épaisseur radiale ou des épaisseurs radiales différentes, ainsi qu'un même diamètre intérieur ou des diamètres intérieurs différents. Dans une réalisation, les joints 21 et 22 sont identiques, les joints 20, 21 et 22 sont une même épaisseur radiale et le joint 20 a un diamètre intérieur légèrement plus petit que le diamètre intérieur des joints 21 et 22. Bien entendu, la pièce mâle 4 est conformée en conséquence, de sorte à recevoir les joints 20, 21 et 22 avec leurs diamètres intérieurs et leurs épaisseurs radiales correspondantes.

Avec les dispositions constructives décrites, il est possible d'activer plusieurs fois la valve selon la séquence état ouvert → état fermé → état ouvert → état fermé tout en garantissant la non contamination du contenu biopharmaceutique du récipient 2 par des contaminants d'origine extérieure (tels que des microorganismes) due au fait de la manipulation de la valve 1.

Comme indiqué, la valve 1 est, selon sa disposition sur le récipient 2 et son usage, une valve dé drainage ou une valve d'emplissage.

L'invention a pour objet la valve 1 qu'elle se trouve à l'état fermé avec la partie de fermeture/ouverture 15a située dans la partie de réception 10 et la pièce mâle 4 obturant l'ouverture de valve latérale 9, ou qu'elle se trouve à l'état ouvert, la partie de fermeture/ouverture 15a étant située hors de la partie de réception 10 et l'ouverture de valve latérale 9 et l'ouverture de valve transversale 16 étant dégagées et aptes à permettre le passage du produit fluide.

Selon une réalisation, la valve est livrée ou se trouve à l'origine à l'état ouvert. Cette disposition constructive permet d'activer la valve de façon optimale.

Selon un développement, la valve n'est pas unique mais est multiple, comprenant une pluralité de valves uniques telles qu'elles ont été précédemment décrites, la pluralité de pièces femelles 3 et la même pluralité de pièces mâles 4 étant disposées les unes à côté des autres, la partie formant bride 8 étant commune à la pluralité de pièces femelles 3.

## Revendications

1. Valve (1) à fonctionnement sélectif, destinée à équiper un récipient à usage biopharmaceutique dont la paroi (2a) comporte une ouverture (2b) à cet effet, du type ayant un axe général (1 a) et comprenant :
▪ une pièce femelle (3), creuse, ayant une partie formant bride latérale (8), apte à être fixée à la paroi (2a) du récipient (2) et une première ouverture de valve,
▪ une pièce mâle (4), creuse, montée à coulissement axial dans la pièce femelle (3) sur une course C entre un état fermé et un état ouvert, ayant une partie proximale de fermeture/ouverture pourvue d'une seconde ouverture de valve, proximale, apte, de façon sélective, à empêcher ou à permettre le passage du produit fluide, respectivement dans l'état fermé et dans l'état ouvert, une partie distale pourvue d'une ouverture distale, et un passage apte au passage du produit fluide, ménagé dans la partie proximale et la partie distale entre la seconde ouverture de valve et l'ouverture distale,
▪ des moyens d'étanchéité (5),
▪ la pièce femelle (3) comportant une paroi d'extrémité (7), fermée, transversale, proximale, et une paroi tubulaire (6) s'étendant axialement, faisant corps avec la partie formant bride (8), ladite paroi tubulaire (6) comportant un tronçon proximal (6a) entre la paroi d'extrémité (7) et la partie formant bride (8), s'étendant axialement sur une longueur au moins égale à la course C, et un tronçon distal (6b) fermé du côté opposé au tronçon proximal (6a) par rapport à la partie formant bride (8), la première ouverture étant une ouverture de valve latérale (9) ménagée sur ledit tronçon proximal (6a),
▪ la pièce mâle (4) comportant une paroi tubulaire (15) s'étendant axialement, formant, du côté proximal, la partie de fermeture/ouverture (15a) dont l'extrémité transversale proximale ouverte constitue la seconde ouverture 16, et, formant, du côté distal, la partie distale (15b),
▪ la partie de fermeture/ouverture (15a) ayant une forme extérieure et une dimension extérieure en correspondance avec la forme intérieure et la dimension intérieure de la partie de réception (10), proximale, de la pièce femelle (3) délimitée par sa paroi d'extrémité.(7) et son tronçon proximal de paroi tubulaire (6), **caractérisée en ce que** :
▪ les moyens d'étanchéité (5) comprennent trois joints annulaires écartés en direction axiale les uns des autres, portés par l'extrados de la paroi tubulaire (15) de la pièce mâle (4) et coopérant avec la partie femelle (3), un joint proximal (20) au produit fluide, associé à la partie de fermeture/ouverture (15a), un joint distal (21) aux contaminants d'origine extérieure, le plus écarté du joint proximal (20), et un joint intermédiaire (22) au produit fluide et aux contaminants d'origine extérieure entre le joint proximal (20) et le joint distal (21).

2. Valve (1) selon la revendication 1, **caractérisée par le fait que** dans l'état fermé, la partie de fermeture/ouverture (15a) est située dans la partie de réception (10), la pièce mâle (4) obturant l'ouverture de valve latérale (9), et dans l'état ouvert, la partie de fermeture/ouverture (15a) est située hors de la partie de réception (10), l'ouverture de valve latérale (9) et l'ouverture de valve transversale (16) étant dégagées et aptes à permettre le passage du produit fluide.

3. Valve (1) selon l'une quelconque des revendications 1 et 2, **caractérisée par le fait que** l'ouverture de valve latérale (9) est adjacente à la partie formant bride (8), du côté proximal.

4. Valve (1) selon l'une quelconque des revendications 1 à 3, **caractérisée par le fait que** le joint proximal (20) au produit fluide coopère au contact de l'intrados de la partie de la paroi tubulaire (6) de la pièce femelle (3) dans l'état fermé, de sorte à empêcher le passage du produit fluide à partir ou vers le récipient (2) par l'ouverture de valve transversale (16).

5. Valve (1) selon l'une quelconque des revendications 1 à 4, **caractérisée par le fait que** le joint distal (21) aux contaminants d'origine extérieure coopère au contact permanent de l'intrados de la partie distale de la paroi tubulaire (6) de la pièce femelle (3) tant dans l'état fermé que dans l'état ouvert, de sorte à empêcher ou limiter le passage de contaminants d'origine extérieure vers le récipient (2), par suite de mouvements de coulissement axial aller-retour de la pièce mâle (4).

6. Valve (1) selon l'une quelconque des revendications 1 à 5, **caractérisée par le fait que** le joint intermédiaire (22) au produit fluide et aux contaminants d'origine extérieure coopère au contact permanent de l'intrados de la partie distale de la paroi tubulaire (6) de la pièce femelle (3) tant dans l'état fermé que dans l'état ouvert, de sorte à empêcher le passage de produit fluide.

7. Valve (1) selon l'une quelconque des revendications 1 à 6, **caractérisée par le fait qu'**elle comporte au moins l'un des éléments suivants :
• l'écartement en direction axiale entre le joint intermédiaire (22) et le joint distal (21) est au moins égal, en particulier est légèrement supérieur à la course C,
• la pièce mâle (4) présente un diamètre transversal légèrement plus petit dans la partie de fermeture/ouverture (15a), de sorte que le joint proximal (20) au produit fluide soit sans contact frottant substantiel avec, et plus particulièrement soit légèrement écarté de l'intrados de, la partie distale de la paroi tubulaire (6) de la pièce femelle (3) dans l'état ouvert et ne vient pas au contact du bord de la partie distale 3b lors de son mouvement quand la valve passe de l'état fermé à l'état ouvert,
• le joint proximal (20) a un diamètre extérieur légèrement plus petit que le diamètre extérieur du joint intermédiaire (22) et du joint distal (21,
• la zone de liaison entre l'intrados de la partie proximale de la paroi tubulaire de la pièce femelle (3) et la zone de l'ouverture de valve latérale (9) est chanfreinée (12), de sorte à être dépourvue d'angle vif,
• la pièce mâle (4) saille de la pièce femelle (3) du côté distal, tant dans l'état fermé que dans l'état ouvert, et en particulier, **caractérisée par le fait que** la partie extrême distale de la partie distale de la pièce mâle (4) forme ou supporte ou coopère avec un moyen de connexion (19), et
• la pièce mâle (4) et la pièce femelle (3) sont reliées cinématiquement l'une à l'autre par un moyen de type hélicoïdal, tel qu'un pivotement axial relatif imprimé à la pièce mâle (4) entraîne son coulissement axial, en particulier un moyen comprenant un ergot latéral d'une pièce coopérant avec une gorge hélicoïdale de l'autre pièce.

8. Valve (1) selon l'une quelconque des revendications 1 à 7, **caractérisée par le fait que** la valve (1) est une valve d'emplissage et/ou de drainage.

9. Valve (1) selon l'une quelconque des revendications 1 à 8, adaptée pour se trouver alternativement :
à l'état fermé, la partie de fermeture/ouverture (15a) étant située dans la partie de réception (10) et la pièce mâle (4) obturant l'ouverture de valve latérale (9), ou,
à l'état ouvert, la partie de fermeture/ouverture (15a) étant située hors de la partie de réception (10) et l'ouverture de valve latérale (9) et l'ouverture de valve transversale (16) étant dégagées et aptes à permettre le passage du produit fluide.

10. Valve multiple comprenant une pluralité de valves selon l'une quelconque des revendications 1 à 9, la pluralité de pièces femelles (3) et la même pluralité de pièces mâles (4) étant disposées les unes à côté des autres, la partie formant bride (8) étant commune à la pluralité de pièces femelles (3).

11. Ensemble comprenant une valve (1) selon l'une quelconque des revendications 1 à 10 et un récipient (2) à usage biopharmaceutique dont la paroi (2a) comporte une ouverture (2b) pour le montage de la valve (1), la partie formant bride (8) étant solidarisée de façon fixe et étanche à la paroi (2a) du récipient (2) autour de l'ouverture (2b), la partie proximale (3a) de la pièce femelle (3) étant située dans l'espace intérieur (2c) délimité par la paroi (2a) du récipient (2) et la partie distale (3b) de la pièce femelle (3) étant située hors dudit espace intérieur (2c).

12. Ensemble selon la revendication 11, **caractérisé par le fait que** la valve (1) est située dans la partie de la paroi du récipient (2) destinée à être une partie inférieure, la valve (1) étant une valve d'emplissage et /ou de drainage, ou, **caractérisé par le fait que** la valve (1) est située dans la partie de la paroi du récipient (2) destinée à être une partie supérieure ou au voisinage de la partie supérieure, la valve (1) étant une valve d'emplissage.

13. Ensemble selon l'une quelconque des revendications 11 à 12, **caractérisé par le fait qu'**il est équipé d'un moyen fonctionnel assurant une fonction en vue du processus biopharmaceutique réalisé au moyen du récipient (2), situé au moins pour partie dans l'espace intérieur (2c) du récipient (2).

14. Ensemble selon la revendication 13, **caractérisé par le fait que** ledit moyen fonctionnel est situé, au moins pour partie, au voisinage de la valve (1), et en particulier est pour partie associée structurellement à elle.

15. Ensemble selon l'une quelconque des revendications 13 et 14, **caractérisé par le fait que** le moyen fonctionnel est un moyen de mélange ou un aérateur ou un autre moyen assurant une fonction en vue du processus biopharmaceutique.

## Patentansprüche

1. Selektiv betriebenes Ventil (1), das zur Ausstattung eines Behälters zur biopharmazeutischen Verwendung vorgesehen ist, dessen Wandung (2a) zu diesem Zweck eine Öffnung (2b) des Typs mit einer Hauptachse (1 a) umfasst und Folgendes beinhaltet:
• ein Aufnahmeteil (3), hohl, das einen Abschnitt aufweist, der einen seitlichen Flansch (8) bildet, geeignet, um an der Wandung (2a) des Behälters (2) und einer ersten Ventilöffnung befestigt zu werden,
• ein Einschubteil (4), hohl, das zur Axialverschiebung in das Aufnahmeteil (3) auf einer Weglänge C zwischen einem geschlossenen Zustand und einem geöffneten Zustand montiert ist und einen proximalen Verschluss- /Öffnungsabschnitt aufweist, der mit einer zweiten proximalen Ventilöffnung ausgestattet ist, die geeignet ist, selektiv den Durchfluss des flüssigen Produkts im geschlossenen Zustand beziehungsweise im geöffneten Zustand zu verhindern oder zu ermöglichen, und einen distalen Abschnitt, der mit einer distalen Öffnung ausgestattet ist, und einen Durchfluss, der zum Durchfluss des flüssigen Produkts geeignet ist, angeordnet in dem proximalen Abschnitt und dem distalen Abschnitt zwischen der zweiten Öffnung des Ventils und der distalen Öffnung,
• Dichtungsmittel (5),
• das Aufnahmeteil (3), das eine Stirnwand (7) umfasst, geschlossen, querliegend, proximal, und eine röhrenförmige Wandung (6), die sich axial erstreckt, integral mit dem den Flansch (8) bildenden Abschnitt verbunden sind, wobei die röhrenförmige Wandung (6) einen proximalen Teilabschnitt (6a) zwischen der Stirnwand (7) und dem den Flansch (8) bildenden Abschnitt umfasst, der sich axial auf einer Länge erstreckt, die mindestens gleich der Weglänge C ist, und einen distalen Teilabschnitt (6b), der auf der dem proximalen Teilabschnitt (6a) gegenüberliegenden Seite bezüglich dem den Flansch (8) bildenden Abschnitt geschlossen ist, wobei die erste Öffnung eine seitliche Ventilöffnung (9) ist, die am proximalen Teilabschnitt (6a) angeordnet ist,
• das Einschubteil (4) eine röhrenförmige Wandung (15) umfasst, die sich axial erstreckt und auf der proximalen Seite den Verschluss-/Öffnungsabschnitt (15a) bildet, dessen offenes proximales Querende die zweite Öffnung 16 bildet, und auf der distalen Seite den distalen Abschnitt (15b) bildet,
• wobei der Verschluss-/Öffnungsabschnitt (15a) eine äußere Form und eine äußere Abmessung in Übereinstimmung mit der inneren Form und inneren Abmessung des proximalen Aufnahmeabschnitts (10) des Aufnahmeteils (3) aufweist, begrenzt durch seine Stirnwand (7) und seinen proximalen Teilabschnitt der röhrenförmigen Wandung (6),
**dadurch gekennzeichnet**:
• dass die Dichtungsmittel (5) drei ringförmige Dichtungen beinhalten, die in axialer Richtung voneinander beabstandet sind, die von der Oberseite der röhrenförmigen Wandung (15) des Einschubteils (4) gestützt werden und die mit dem Aufnahmeteil (3) zusammenwirken, eine proximale Dichtung (20) für ein flüssiges Produkt, die mit dem Verschluss-/Öffnungsabschnitt (15a) verbunden ist, eine distale Dichtung (21) für Verunreinigungen externen Ursprungs (20) und eine mittlere Dichtung (22) für ein flüssiges Produkt und Verunreinigungen externen Ursprungs zwischen der proximalen Dichtung (20) und der distalen Dichtung (21).

2. Ventil (1) nach Anspruch 1, **dadurch gekennzeichnet, dass** sich im geschlossenen Zustand der Verschluss-/Öffnungsabschnitt (15a) im Aufnahmeabschnitt (10) befindet, wobei das Einschubteil (4) die seitliche Ventilöffnung (9) verschließt, und sich im geöffneten Zustand der Verschluss- /Öffnungsabschnitt (15a) außerhalb des Aufnahmeabschnitts (10) befindet, wobei die seitliche Ventilöffnung (9) und die querliegende Ventilöffnung (16) freiliegend sind und geeignet sind, den Durchfluss des flüssigen Produkts zu ermöglichen.

3. Ventil (1) nach einem der Ansprüche 1 und 2, **dadurch gekennzeichnet, dass** die seitliche Ventilöffnung (9) an dem den Flansch (8) bildenden Abschnitt angrenzt, auf der proximalen Seite.

4. Ventil (1) nach einem der Ansprüche 1 bis 3, **dadurch gekennzeichnet, dass** die proximale Dichtung (20) für ein flüssiges Produkt in Kontakt mit der Innenseite des Abschnitts der röhrenförmigen Wandung (6) des Aufnahmeteils (3) im geschlossenen Zustand zusammenwirkt, um den Durchfluss des flüssigen Produkts von oder zu dem Behälter (2) durch die querliegende Ventilöffnung (16) zu verhindern.

5. Ventil (1) nach einem der Ansprüche 1 bis 4, **dadurch gekennzeichnet, dass** die distale Dichtung (21) für Verunreinigungen externen Ursprungs in permanentem Kontakt mit der Innenseite des distalen Abschnitts der röhrenförmigen Wandung (6) des Aufnahmeteils (3) sowohl im geschlossenen Zustand als auch im geöffneten Zustand zusammenwirkt, um den Durchfluss von Verunreinigungen externen Ursprungs zu dem Behälter (2) als Folge der axialen Hin- und Herverschiebung des Einschubteils (4) zu verhindern oder zu begrenzen.

6. Ventil (1) nach einem der Ansprüche 1 bis 5, **dadurch gekennzeichnet, dass** die mittlere Dichtung (22) für ein flüssiges Produkt und Verunreinigungen externen Ursprungs in permanentem Kontakt mit der Innenseite des distalen Abschnitts der röhrenförmigen Wandung (6) des Aufnahmeteils (3) sowohl im geschlossenen Zustand als auch im geöffneten Zustand zusammenwirkt, um den Durchfluss eines flüssigen Produkts zu verhindern.

7. Ventil (1) nach einem der Ansprüche 1 bis 6, **dadurch gekennzeichnet, dass** es mindestens eines der folgenden Elemente umfasst:
• der Abstand in axialer Richtung zwischen der mittleren Dichtung (22) und der distalen Dichtung (21) ist zumindest gleich, insbesondere ist er geringfügig größer als die Weglänge C,
• das Einschubteil (4) weist im Verschluss-/Öffnungsabschnitt (15a) einen geringfügig kleineren Querdurchmesser auf, sodass die proximale Dichtung (20) für ein flüssiges Produkt ohne wesentlichen Reibungskontakt mit diesem ist und insbesondere geringfügig von der Innenseite des distalen Abschnitts der röhrenförmigen Wandung (6) des Aufnahmeteils (3) im geöffneten Zustand beabstandet ist, und bei seiner Bewegung, wenn das Ventil vom geschlossen Zustand in den geöffneten Zustand übergeht, nicht in Kontakt mit dem Rand des distalen Abschnitts 3b kommt,
• die proximale Dichtung (20) hat einen geringfügig kleineren Außendurchmesser als der Außendurchmesser der mittleren Dichtung (22) und der distalen Dichtung (21),
• der Verbindungsbereich zwischen der Innenseite des proximalen Abschnitts der röhrenförmigen Wandung des Aufnahmeteils (3) und des Bereichs der seitlichen Ventilöffnung (9) ist abgeschrägt (12), um frei von scharfen Kanten zu sein,
• das Einschubteil (4) steht aus dem Aufnahmeteil (3) auf der distalen Seite hervor, sowohl im geschlossenen Zustand als auch im geöffneten Zustand, und ist insbesondere **dadurch gekennzeichnet, dass** der distale Endabschnitt des distalen Abschnitts des Einschubteils (4) ein Verbindungsmittel (19) bildet oder unterstützt oder damit zusammenwirkt, und
• das Einschubteil (4) und das Aufnahmeteil (3) sind durch ein schraubenartiges Mittel miteinander verbunden, sodass das Ausüben eines relativen axialen Schwenkens auf das Einschubteil (4) zu seiner axialen Verschiebung führt, insbesondere ein Mittel, das einen seitlichen Stift eines Teils beinhaltet, der mit einer schraubenförmigen Nut des anderen Teils zusammenarbeitet.

8. Ventil (1) nach einem der Ansprüche 1 bis 7, **dadurch gekennzeichnet, dass** das Ventil (1) ein Einfüll- und/oder ein Ablassventil ist.

9. Ventil (1) nach einem der Ansprüche 1 bis 8, geeignet, um sich alternativ:
im geschlossen Zustand zu befinden, wobei sich der Verschluss- /Öffnungsabschnitt (15a) im Aufnahmeabschnitt (10) befindet und das Einschubteil (4) die seitliche Ventilöffnung (9) verschließt, oder,
im geöffneten Zustand zu befinden, wobei sich der Verschluss- /Öffnungsabschnitt (15a) außerhalb des Aufnahmeabschnitts (10) befindet und
die seitliche Ventilöffnung (9) und die querliegende Ventilöffnung (16) freiliegend sind und geeignet sind, den Durchfluss des flüssigen Produkts zu ermöglichen.

10. Mehrfachventil, das eine Vielzahl von Ventilen nach einem der Ansprüche 1 bis 9 beinhaltet, wobei die Vielzahl von Aufnahmeteilen (3) und die gleiche Vielzahl von Einschubteilen (4) nebeneinander angeordnet sind, wobei der Abschnitt, der den Flansch (8) bildet, der Vielzahl von Aufnahmeteilen (3) gemeinsam ist.

11. Anordnung bestehend aus einem Ventil (1) nach einem der Ansprüche 1 bis 10 und einem Behälter (2) zur biopharmazeutischen Verwendung, dessen Wandung (2a) eine Öffnung (2b) für die Montage des Ventils (1) umfasst, wobei der Abschnitt, der den Flansch (8) bildet, fest und dicht an der Wandung (2a) des Behälters (2) um die Öffnung (2b) befestigt ist, wobei sich der proximale Abschnitt (3a) des Aufnahmeteils (3) im Innenraum (2c) befindet, der durch die Wandung (2a) des Behälters (2) und den distalen Abschnitt (3b) des Aufnahmeteils (3) begrenzt ist, das sich außerhalb dieses Innenraums (2c) befindet.

12. Anordnung nach Anspruch 11, **dadurch gekennzeichnet, dass** sich das Ventil (1) in dem Abschnitt der Wandung des Behälters (2) befindet, der als ein unterer Abschnitt vorgesehen ist, und das Ventil (1) ein Einfüll- und/oder ein Ablassventil ist, oder **dadurch gekennzeichnet, dass** sich das Ventil (1) in dem Abschnitt der Wandung des Behälters (2) befindet, der als ein oberer Abschnitt oder in der Nähe des oberen Abschnitts vorgesehen ist, und das Ventil (1) ein Einfüllventil ist.

13. Anordnung nach einem der Ansprüche 11 bis 12, **dadurch gekennzeichnet, dass** sie mit einem funktionellen Mittel ausgestattet ist, das eine Funktion hinsichtlich des Mittels des Behälters (2) durchgeführten biopharmazeutischen Verfahrens sicherstellt, angeordnet zumindest teilweise im Innenraum (2c) des Behälters (2).

14. Anordnung nach Anspruch 13, **dadurch gekennzeichnet, dass** sich das funktionelle Mittel zumindest teilweise in der Nähe des Ventils (1) befindet und insbesondere teilweise mit diesem strukturell verbunden ist.

15. Anordnung nach einem der Ansprüche 13 und 14, **dadurch gekennzeichnet, dass** das funktionelle Mittel ein Mittel zum Mischen oder ein Belüfter oder ein anderes Mittel ist, das eine Funktion hinsichtlich des biopharmazeutischen Verfahrens sicherstellt.

## Claims

1. Selective operation valve (1), intended for equipping a recipient for biopharmaceutical use having a wall (2a) comprising an opening (2b) for this purpose, of the type having a main axis (1a) and comprising:
• a hollow female part (3), having a lateral flange part (8) adapted for attachment to the wall (2a) of the recipient (2) and a first valve opening,
• a hollow male part (4), mounted to slide axially within the female part (3) in a stroke C between a closed state and an open state, having a proximal closing/opening part provided with a second valve opening, proximal, capable of selectively preventing or allowing the passage of fluid product when respectively in the closed state and in the open state, a distal portion provided with a distal opening, and a passageway adapted for the passage of fluid product, arranged in the proximal portion and the distal portion between the second valve opening and the distal opening,
• sealing means (5),
• the female part (3) comprising a closed, transverse, proximal end wall (7), and a tubular wall (6) extending axially and integral with the flange part (8), said tubular wall (6) having a proximal section (6a) between the end wall (7) and the flange part (8), extending axially for a length at least equal to the stroke C, and a distal section (6b) closed on the side opposite the proximal section (6a) relative to the flange part (8), the first opening being a lateral valve opening (9) arranged in said proximal section (6a),
• the male part (4) comprising a tubular wall (15) extending axially, forming, on the proximal side, the closing/opening part (15a) whose open proximal transverse end constitutes the second opening (16), and forming, on the distal side, the distal portion (15b),
• the closing/opening part (15a) having an external shape and an external dimension that fit the internal shape and internal dimension of the proximal receiving part (10) of the female part (3) delimited by its end wall (7) and its proximal section of tubular wall (6), **characterized in that**:
• the sealing means (5) comprise three ring seals spaced apart from each other in the axial direction, supported by the outer surface of the tubular wall (15) of the male part (4) and cooperating with the female part (3), a proximal seal (20) to the fluid product, associated with the closing/opening part (15a), a distal seal (21) to contaminants of external original, the furthest from the proximal seal (20), and an intermediate seal (22) to the fluid product and to contaminants of external origin, between the proximal seal (20) and the distal seal (21).

2. Valve (1) according to claim 1, wherein, in the closed state, the closing/opening part (15a) is located within the receiving part (10), the male part (4) covering the lateral valve opening (9), and in the open state, the closing/opening part (15a) is located outside the receiving part (10), the lateral valve opening (9) and the transverse valve opening (16) being unobstructed and allowing the passage of fluid product.

3. Valve (1) according to either of claims 1 or 2, wherein the lateral valve opening (9) is adjacent to the flange part (8), on the proximal side.

4. Valve (1) according to any one of claims 1 to 3, wherein, in the closed state, the proximal seal (20) to the fluid product cooperates with the inside surface of the portion of the tubular wall (6) of the female part (3) by contact with it, so as to prevent the passage of fluid product to or from the recipient (2) through the transverse valve opening (16).

5. Valve (1) according to any one of claims 1 to 4, wherein, in both the closed state and the open state, the distal seal (21) to contaminants of external origin cooperates with the inside surface of the distal portion of the tubular wall (6) of the female part (3) by continual contact with it, so as to prevent or limit the passage of contaminants of external origin into the recipient (2) as the male part (4) slides axially back and forth.

6. Valve (1) according to any one of claims 1 to 5, wherein, in both the closed state and the open state, the intermediate seal (22) to the fluid product and to contaminants of external origin cooperates with the inside surface of the distal portion of the tubular wall (6) of the female part (3) by continual contact with it, so as to prevent the passage of fluid product.

7. Valve (1) according to any one of claims 1 to 6, wherein it comprises at least one of the following elements:
• the distance in the axial direction between the intermediate seal (22) and the distal seal (21) is at least equal, in particular is slightly greater than the stroke C,
• the male part (4) has a slightly smaller transverse diameter in the closing/opening part (15a), so that the proximal seal (20) to the fluid product is without substantial frictional contact with, and more particularly is slightly apart from the inside surface of, the distal portion of the tubular wall (6) of the female part (3) when in the open state and does not come in contact with the edge of the distal portion (3b) during its movement when the valve transitions from the closed to the open state,
• the proximal seal (20) has a slightly smaller outside diameter than the outside diameter of the intermediate seal (22) and of the distal seal (21),
• the area connecting the inside surface of the proximal portion of the tubular wall of the female part (3) and the lateral valve opening (9) area is chamfered (12) to eliminate any sharp corners,
• the male part (4) protrudes from the female part (3) on the distal side, in both the closed state and the open state, and in particular, wherein the distal end portion of the distal portion of the male part (4) forms or supports or cooperates with a connection means (19), and
• the male part (4) and the female part (3) are kinematically coupled to each other by a helical-type means, such as a relative axial pivoting imparted to the male part (4) which causes it to slide axially, in particular a means comprising a lateral pin on a part engaging with a helical groove in the other part.

8. Valve (1) according to any one of claims 1 to 7, wherein the valve (1) is a supply valve and/or drain valve.

9. Valve (1) according to any one of claims 1 to 8, configured to be alternately:
in the closed state, the closing/opening part (15a) being located within the receiving part (10) and the male part (4) covering the lateral valve opening (9), or,
in the open state, the closing/opening part (15a) being located outside the receiving part (10) and the lateral valve opening (9) and transverse valve opening (16) being unobstructed and
able to allow the passage of fluid product.

10. Multiple valve arrangement, comprising a plurality of valves according to any one of claims 1 to 9, the plurality of female parts (3) and the same plurality of male parts (4) being arranged beside one another, the flange part (8) being common to the plurality of female parts (3).

11. Assembly comprising a valve according to any one of claims 1 to 10 and a recipient (2) for biopharmaceutical use having a wall (2a) comprising an opening (2b) for mounting the valve (1), the flange part (8) being secured in a fixed and fluid-tight manner to the wall (2a) of the recipient (2) around the opening (2b), the proximal portion (3a) of the female part (3) being located within the inside space (2c) delimited by the wall (2a) of the recipient (2), and the distal portion (3b) of the female part (3) being located outside said inside space (2c).

12. Assembly according to claim 11, wherein the valve (1) is located in the portion of the recipient wall (2) intended to be a lower portion, the valve (1) then being a supply and/or drain valve, or, wherein the valve (1) is located in the portion of the recipient wall (2) intended to be an upper portion or to be near the upper portion, the valve (1) then being a supply valve.

13. Assembly according to any one of claims 11 to 12, wherein it is equipped with a functional means for carrying out a function for a biopharmaceutical process performed using the recipient (2), located at least partly within the inside space (2c) of the recipient (2).

14. Assembly according to claim 13, wherein said functional means is located at least partly near the valve (1), and in particularly is partly associated structurally with it.

15. Assembly according to either of claims 13 or 14, wherein the functional means is a mixing means or an aerator or some other means for carrying out a function for a biopharmaceutical process.
